# EUROPEAN PATENT SPECIFICATION

(11) **EP 2 214 459 B1**
(45) Date of publication and mention of the grant of the patent: **09.11.2011**
(21) Application number: 10151458.6
(22) Date of filing: 22.01.2010
(51) Int. Cl.: H05B 41/288

(54) **Discharge lamp lighting circuit of double converter type**
Entladungslampenlichtstromkreis des Doppelwandlertyps
Circuit d'éclairage de lampe à décharge de type double convertisseur

(30) Priority: 02.02.2009 JP 2009021798
(43) Date of publication of application: 04.08.2010
(73) Proprietor: Koito Manufacturing Co., Ltd., Tokyo 108-8711 (JP)
(72) Inventor: Muramatsu, Takao, Shizuoka Shizuoka 424-8764 (JP); Ito, Masayasu, Shizuoka Shizuoka 424-8764 (JP)
(74) Representative: Neobard, William John

(56) References cited:
- US-A- 4 814 965
- US-A- 5 212 428
- US-A1- 2007 247 088
- US-B1- 6 437 519
- US-B1- 6 522 089

## Description

The present invention relates to a discharge lamp lighting circuit.

In recent years, metal halide lamps (hereinafter referred to as discharge lamps) have been in wider use as automotive lamps (headlamps) replacing conventional halogen lamps having a filament or filaments. The discharge lamps feature better luminance efficiency and longer life than the halogen lamps. However, the discharge lamps require several tens to several hundreds of volts as drive voltage, and thus they cannot be directly driven by a vehicular battery of 12 V (or 24 V). For vehicular applications, therefore , the instalment of a discharge lamp lighting circuit (also called an electrical ballast) is required.

The systems for lighting the discharge lamps are classified into the DC drive type and the high-frequency AC drive type. The DC drive type, however, is not suited to uses for automotive lamps because its discharge arc is asymmetric and luminescence profile is uneven. An AC drive is therefore generally used for automotive lamps. Yet, the AC drive of a discharge lamp at high frequencies of 10 kHz or over causes a phenomenon of gas current within the discharge tube resonating with the lighting frequency (called an acoustic resonance also), presenting a problem of unstable discharge arc. Accordingly, a system for driving at low frequencies of 10 kHz or below (low-frequency drive system) has today become mainstream in order to cancel out the disadvantages of both the DC drive and the high-frequency AC drive.

A discharge lamp lighting circuit disclosed in Japanese Patent Application Publication No. Heill-329777 includes a DC-DC converter for boosting the battery voltage, a switching circuit, such as an H-bridge circuit, for AC-converting the output voltage of the DC-DC converter, a starter circuit, and a control circuit for controlling these circuit blocks.

In Japanese Patent Application No. 2008-054970, the present applicant has proposed a circuit configuration in which two DC-DC converters provided at their respective ends of a discharge lamp are operated alternately to supply an AC drive voltage to the ends of the discharge lamp to effect AC lighting (hereinafter referred to as "double converter type" or "double converter structure"). The use of the double converter type, however, may necessitate a larger circuit scale if a control system is installed for each of the two DC-DC converters. Then the number of circuit elements to be used may increase, and consequently the cost may rise.
US-B1- 6,522,089 discloses a method and apparatus for controlling a lamp ballast having a DC-DC converter with first and second MOSFETs acting as switches alternately connecting a DC power source to a power transformer, with an output of the power transformer being connected to a DC-AC inverter driving the lamp. The first and second MOSFETs in the DC-DC converter are alternately opened and closed at a frequency that is swept repeatedly between predetermined minimum and maximum frequencies. A microcontroher-based feedback element determines instantaneous power consumption by the lamp and controls the MOSFETs through a pulse width modulator to continuously adjust a duty cycle of signals driving gates of the MOSFETs to maintain a desired level of power consumption.
US-A- 4,814,965 discloses a modular high power, flyback transformer based power supply with step up and step down capability. The power supply uses multiple flyback transformers having switching transistors which may be either connected to one terminal of the primary winding or which may be placed in the centre of the primary winding. The switching transistors are driven by pulse trains which are out of phase with each other. This results in lowered RMS values for ripple current through the input and output capacitors. The flyback voltage transients may be used to step up or step down the input voltage by varying the pulse width of the pulse in the switching pulse trains. In embodiments where the switching transistors are placed in the middle of the primary windings, better suppression of radio frequency emissions and current in safety ground wires is achieved. There is also disclosed a combination of such power supply modules in series or parallel on either the input or output to deliver higher power or higher output voltage or to be able to handle higher levels of DC input voltage. There is also disclosed an improved flyback transformer design having substantially lower leakage inductance using coaxial cable as the wire from which the primary and secondary windings are made.
US-A-5,212,428 discloses a lighting circuit for a vehicular discharge lamp comprising a DC-to-AC converter, a lamp voltage detector, a lamp current detector, a voltage·current controller, and a power change reducing means. The DC-to-AC converter converts a DC voltage into an AC voltage and supplies it to the discharge lamp. The lamp voltage detector acquires a detection signal concerning a lamp voltage of the discharge lamp. The lamp current detector acquires a detection signal concerning a lamp controller produces a lamp current controller instruction signal generated with respect to the lamp voltage upon reception of the detection signal from the lamp voltage detector, and supplies a control signal to the DC-to-AC converter so as to minimize differences between the instruction signal and the detection signal from the lamp current detector, thereby controlling the output voltage of the DC-to-AC converter. This controller has at least a lighting acceleration area for producing the lamp-current control instruction signal to permit supply of greater power than rated power of the discharge lamp and a steady power control area for performing steady power control of the discharge lamp with the rated power, as a control area based on lamp voltage-lamp current characteristic. The power change reducing means suppresses a change in power supply to the discharge lamp with respect to the lamp voltage at a time of transition to the steady power control area from the lighting acceleration area, thereby shortening the time required for flux of light from the discharge lamp to become stable.
US-A-2007/0247088 discloses a discharge lamp ballast apparatus including a DC/DC converter having a transformer and a DC/DC converter having a transformer which are connected in parallel; a control section for controlling a the output voltages of the DC/DC converters by varying their duties with shifting the operation phases of the transformers of the DC/DC converters; and a voltage-multiplier rectifier circuit having diodes and capacitors for generating a high voltage used for starting a discharge lamp by utilizing the potential difference between the output voltages of the transformers.
US-B-6,437,519 discloses a lighting circuit having a DC power supply circuit, a DC-AC conversion circuit for converting the output voltage of the DC power supply circuit into AC voltage and then supplying the AC voltage to two discharge lamps, and a control circuit for controlling lighting of each discharge lamp in response to a voltage or current detection signal related to the discharge lamp. A full-bridge type circuit consisting of four switch elements is formed in the DC-AC conversion circuit to switch positive-polarity voltage and negative-polarity voltage output from the DC power supply circuit, and AC voltage generated by alternately operating the switch elements in pairs is supplied to each discharge lamp. To light one discharge lamp, the state of each of the switch elements is fixed so that the polarity of the voltage supplied to the discharge lamp before the discharge lamp is started is defined as either positive or negative polarity and the switch elements are alternately operated after the discharge lamp is lighted.

The present invention has been made in view of the foregoing circumstances, and one of the purposes thereof is to provide a discharge lamp lighting circuit capable of advantageously controlling the two DC-DC converters.
The invention is defined in the appended claims.

One embodiment of the present invention relates to a discharge lamp lighting circuit. This discharge lamp lighting circuit comprising: a first DC-DC converter for supplying, in an active state, a first drive voltage to one end of a discharge lamp to be driven; a second DC-DC converter for supplying, in an active state, a second drive voltage to the other end of the discharge lamp; and a control circuit configured to supply an AC drive voltage to the discharge lamp by alternately setting the first DC-DC converter in the active state and setting the second DC-DC converters in the active state on a predetermined lighting cycle and configured to bring an average value of output power of the first DC-DC converter in the active state and output power of the second DC-DC converter in the active state closer to a predetermined target power by controlling the duty ratio of on and off of the respective switching elements of the first and second DC-DC converters.
The control circuit outputs a pulse modulation signal, the duty ratio of which being so controlled as to bring the average value of output power closer to the target power, to a control terminal of the switching element of the first DC-DC converter when the first DC-DC converter is set in the active state and to a control terminal of the switching element of the second DC-DC converter when the second DC-DC converter is set in the active state.

Embodiments will now be described by way of example only, with reference to the accompanying drawings:
FIG. 1 is a circuit diagram showing a configuration of an automotive lamp provided with a discharge lamp lighting circuit according to an embodiment;
FIG. 2 is a circuit diagram showing a configuration of a PWM generating circuit of FIG. 1;
FIG. 3 is a circuit diagram showing a configuration of a timing control circuit of FIG. 2;
FIG. 4 is a timing chart showing waveforms of inverter signal and inverter delay signal versus waveforms of SH timing signal and counter operation permission signal;
FIG. 5 illustrates how digital values in a sink/source amount determining circuit of FIG. 2 are counted;
FIG. 6 is a circuit diagram showing a configuration of a sink/source amount determining circuit of FIG. 2;
FIG. 7 is a circuit diagram showing a configuration of a sink/source selection circuit of FIG. 2;
FIG. 8 is a timing chart showing an operating state of a discharge lamp lighting circuit of FIG. 1;
FIGS. 9A and 9B are timing charts showing operating states after a DC period of a discharge lamp lighting circuit of FIG. 1;
FIG. 10 is a graph showing how a drive power in a discharge lamp lighting circuit of FIG. 1 is controlled; and
FIGS. 11A and 11B are waveform diagrams based on actual measurement values according to a comparative technique and according to the present embodiment, respectively.

The present invention will now be described based on preferred embodiments with reference to the accompanying drawings. Like reference signs indicate like parts.

In the present specification, the state represented by the phrase "the member A is connected to the member B" includes a state in which the member A is indirectly connected to the member B via another member that does not affect the electric connection therebetween, in addition to a state in which the member A is physically and directly connected to the member B. Similarly, the state represented by the phrase "the member C is provided between the member A and the member B" includes a state in which the member A is indirectly connected to the member C, or the member B is indirectly connected to the member C via another member that does not affect the electric connection therebetween, in addition to a state in which the member A is directly connected to the member C, or the member B is directly connected to the member C.

A discharge lamp lighting circuit according to the present embodiment includes two DC-DC converters for alternately supplying electric power to a discharge lamp to be driven, and these two DC-DC converters are driven using a single PWM (Pulse Width Modulation) signal. This arrangement ensures a reduced number of components and reduced circuit area, thereby cutting down the cost, when compared with a structure having an independent PWM signal and its generating circuit for each of the two DC-DC converters. The arrangement also involves a control of bringing one of the output powers of the two DC-DC converters closer to the other thereof. As a result, the output powers of the two DC-DC converters can be equalized even when there are differences in output characteristics of the two DC-DC converters due to variations in characteristics of the circuit elements.

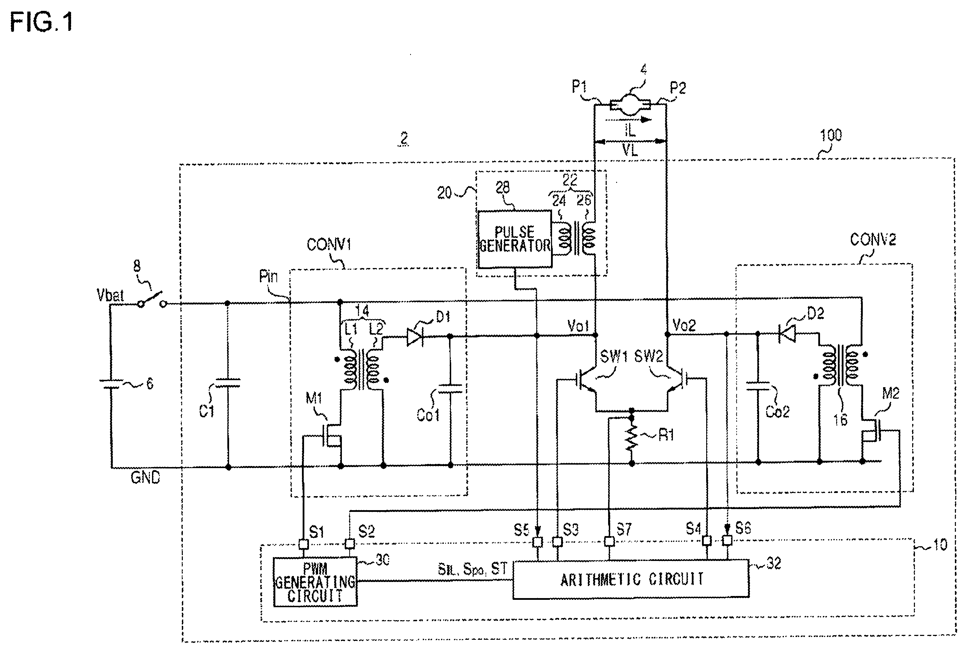

FIG. 1 is a circuit diagram showing a configuration of an automotive lamp 2 provided with a discharge lamp lighting circuit 100 according to this embodiment. The automotive lamp 2 includes a discharge lamp 4, which is a metal halide lamp, a discharge lamp lighting circuit 100 for driving the discharge lamp 4, a vehicular battery (hereinafter referred to simply as a battery) 6, and a power supply switch 8.

The battery 6 generates a DC voltage Vbat of 12 V (or 24 V). The power supply switch 8, which is connected in series to the battery 6, is a relay switch for controlling the on and off of the discharge lamp 4.

The discharge lamp lighting circuit 100 boosts a smoothed battery voltage Vbat, AC-converts it, and supplies a drive voltage (called lamp voltage also) VL across the discharge lamp 4. The drive voltage VL has a first frequency (lighting frequency) f1 in a steady lighting state. The first frequency f1 is set to 10 kHz or below, or more specifically to about 250 Hz to 750 Hz. The inverse of the lighting frequency f1 is called a lighting cycle T1 (= 1/f1)

The discharge lamp lighting circuit 100 includes a first DC-DC converter CONV1, a second DC-DC converter CONV2, a control circuit 10, a starter circuit 20, a first switch SW1, a second switch SW2, a current sensing resistor R1, and an input capacitor C1.

The input capacitor C1, which is connected in parallel with the battery 6, smoothes the battery voltage Vbat. More specifically, the input capacitor C1, located in the vicinity of a first transformer 14 and a second transformer 16, performs a function of smoothing the voltage disturbed by the switching operation of the first DC-DC converter CONV1 and the second DC-DC converter CONV2.

The control circuit 10. which includes a functional IC (integrated circuit) for controlling the discharge lamp lighting circuit 100 as a whole, not only controls the operation sequence of the discharge lamp lighting circuit 100 but also adjusts the electric power to be supplied to the discharge lamp 4. The control circuit 10 executes the following sequences to light up the discharge lamp 4 and stabilize the light output thereof :
1. Power on
2. Breakdown
3. DC period
4. Run-up
5. Steady lighting
The details of each sequence will be discussed later.

The control circuit 10 includes a PWM generating circuit 30 and an arithmetic circuit 32. The arithmetic circuit 32 monitors a first output signal S5 indicating a first output voltage Vol of the first DC-DC converter CONV1, a second output signal S6 indicating a second output voltage Vo2 of the second DC-DC converter CONV2, and a current sensing signal S7 indicating a lamp current IL flowing through the discharge lamp 4. The arithmetic circuit 32 performs feedback control and the like based on those signals monitored.

The arithmetic circuit 32 outputs a first control signal S3 to the first switch SW1 and outputs a second control signal S4 to the second switch SW2. The arithmetic circuit 32 outputs a current information signal S_{IL}, an inverter signal ST1, an inverter delay signal ST2, a power correlation signal ST3, a high-speed clock signal ST4, a low-speed clock signal ST5, a reset signal ST6, a light-off signal ST7, and a power information signal S_{PC} to the PWM generating circuit 30. The inverter signal ST1. the inverter delay signal ST2, the power correlation signal ST3, the high-speed clock signal ST4, the low-speed clock signal. ST5, the reset signal ST6, and the light-off signal ST7 are generically referred to as "timing signals ST" or "timing signal ST" . These signals will be described later.

According to a current information signal S_{IL}, a power information signal Sₚₒ, and a timing signal ST, the PWM generating circuit 30 generates a first control pulse signal S1 for controlling the on-off of the first switching element M1 of the first DC-DC converter CONV1 and a second control pulse signal S2 for controlling the on-off of the second switching element M2 of the second DC-DC converter CONV2. The details will be discussed later.

The first DC-DC converter CONV1, which is an insulated switching regulator, includes a first switching element M1, a first transformer 14, a first rectifier diode D1, and a first output capacitor Col. Since the topology of the first DC-DC converter CCNV1 is generally known, it will be explained briefly.

A primary coil L1 of the first transformer 14 and the first switching element M1 are connected in parallel with the input capacitor C1 and in series with each other between an input terminal Pin of the first DC-DC converter CONV1 and a ground terminal (GND). The first switching element M1 is constructed of an N-channel MOSFET, for instance. One end of a secondary coil L2 of the first transformer 14 is grounded, and the other end thereof is connected to an anode of the first rectifier diode D1. The first output capacitor Co1 is connected between a cathode of the first rectifier diode D1 and a ground terminal.

A first control pulse signal S1, which has been pulse-width-modulated by the PWM generating circuit 30, is applied to a control terminal (gate) of the first switching element M1. The first switching element M1 turns on when the first control pulse signal S1 goes high and turns off when the pulse signal S1 goes low. Hence, as the duty ratio of the first control pulse signal S1 changes, a drive power PL (= [drive voltage VL] × [lamp current IL]) outputted by the first DC-DC converter CCNV1 to the discharge lamp 4 changes also.

The first DC-DC converter CONV1, which is switchable between an active state and a non-active state, supplies a first output voltage Vo1 to a first end P1 (one end P1) of the discharge lamp 4 in the active state.

The second DC-DC converter CONV2 has the same circuit topology as the first DC-DC converter CONV1. That is, a second rectifier diode D2 corresponds to the first rectifier diode D1, a second output capacitor Co2 corresponds to the first output capacitor Co1, a second transformer 16 corresponds to the first transformer 14, and a second switching element M2 corresponds to the first switching element M1. The on-off of the second switching element M2 is controlled by the second control pulse signal S2 which has been pulse-wsidth-modulated by the PWM generating circuit 30. As the duty ratio of the second control pulse signal S2 changes, the drive power PL outputted by the second DC-DC converter CONV2 to the discharge lamp 4 changes also.

The second DC-DC converter CONV2, which is also switchable between an active state and a non-active state, supplies a second output voltage Vo2 to a second end P2 (the other end P2) of the discharge lamp 4 in the active state.

The first switch SW1, which is connected on a first end P1 side of the discharge lamp 4, provides electrical conduction between the first end P1 of the discharge lamp 4 and a fixed voltage terminal (ground terminal) when the first switch SW1 is on. The second switch SW2, which is connected on a second end P2 side of the discharge lamp 4, provides electrical conduction between the second end P2 of the discharge lamp 4 and the fixed voltage terminal (ground terminal) when the second switch SW2 is on. It should be noted that IGBT (insulated gate bipolar transistor) or MOSFET (metal oxide semiconductor field effect transistor) may be suitably used as the first switch SW1 and second switch SW2, but any other alternative device may be used as well. The on and off states of the first switch SW1 and the second switch SW2 are controlled in response to the first control signal S3 and the second control signal S4 from the control circuit 10, respectively.

The first DC-DC converter CONV1 and the second DC-DC converter CONV2 repeat the active state and the non-active state alternately on a predetermined cycle T1 (i.e., first frequency f1). In other words, the active period of the first DC-DC converter CONV1 and the active period of the second DC-DC converter CONV2 are each a half cycle of the lighting cycle T1. Hereinbelow, a state in which the first DC-DC converter CONV1 is active will be referred to as a first state φ1, and a state in which the second DC-DC converter CONV2 is active will be referred to as a second state φ2. The first switch SW1 turns on when the second DC-DC converter CONV2 is active, or in the second state φ2, whereas the second switch SW2 turns on when the first DC-DC converter CONV1 is active, or in the first state φ1.

In the first state φ1, a first output voltage Vo1 is applied to the first end P1 of the discharge lamp 4, and a ground voltage (0 V) is applied to the second end P2 thereof. As a result, a drive voltage VL (≈ Vo1) in a first polarity is applied to the discharge lamp 4. In the second state φ2, a second output voltage Vo2 is applied to the second end P2 of the discharge lamp 4, and a ground voltage is applied to the first end P1 thereof. As a result, a drive voltage VL (≈Vo2) in a second polarity, which is the opposite of the first polarity, is applied to the discharge lamp 4.

In a run-up period and a steady lighting period, the discharge lamp lighting circuit 100 repeats the first state φ1 and the second state φ2 alternately on the lighting cycle T1. As a result, an AC drive voltage VL is supplied to the discharge lamp 4.

The control circuit 10 performs a control of bringing an average value Pa of a drive power outputted to the discharge lamp 4 by the first DC-DC converter [CONV1] in the active state and a drive power outputted to the discharge lamp 4 by the second DC-DC converter (CONV2) in the active state closer to a predetermined target power Po by controlling the duty ratio of the on and off of the first switching element M1 and the second switching element M2.

The current sensing resistor R1 is connected on a path of lamp current IL flowing to the discharge lamp 4. In the circuit shown in FIG. 1, the current sensing resistor R1 is connected between the emitters of the commonly connected first switch SW1 and second switch SW2 and a ground terminal. In the first state φ1, a lamp current flows in a first polarity (rightward in FIG . 1) in the discharge lamp 4 , and in the second state φ2, a lamp current flows in a second polarity (leftward in FIG. 1) in the discharge lamp 4. in each of the first state φ1 and the second state φ2, a voltage drop (current sensing signal S7) proportional to the lamp current IL occurs in the current sensing resistor R1.

The starter circuit 20, which is provided to make the discharge lamp 4 breakdown, includes a starter transformer 22 and a pulse generator 28. The pulse generator 28 of the starter circuit 20 applies a pulse voltage of 400 V amplitude to the primary coil 24 of the starter transformer 22. As a result, a high-voltage pulse (e.g., 20 KV) corresponding to the turn ratio of the starter transformer 22 occurs in the secondary coil 26 and is then applied to the discharge lamp 4. Thus the discharge lamp 4 breaks down to start a discharge.

The PWM generating circuit 30 samples information on the drive power outputted by the first DC-DC converter CONV1 to the discharge lamp 4 during the first state φ1. period and holds it during the second state φ2 period. The PWM generating circuit 30 compares the information held as mentioned above with the information on the drive power outputted by the second DC-DC converter CONV2 to the discharge lamp 4, and performs a control of bringing the drive power to be outputted in the second state φ2 closer to the drive power outputted in the first state φ1.

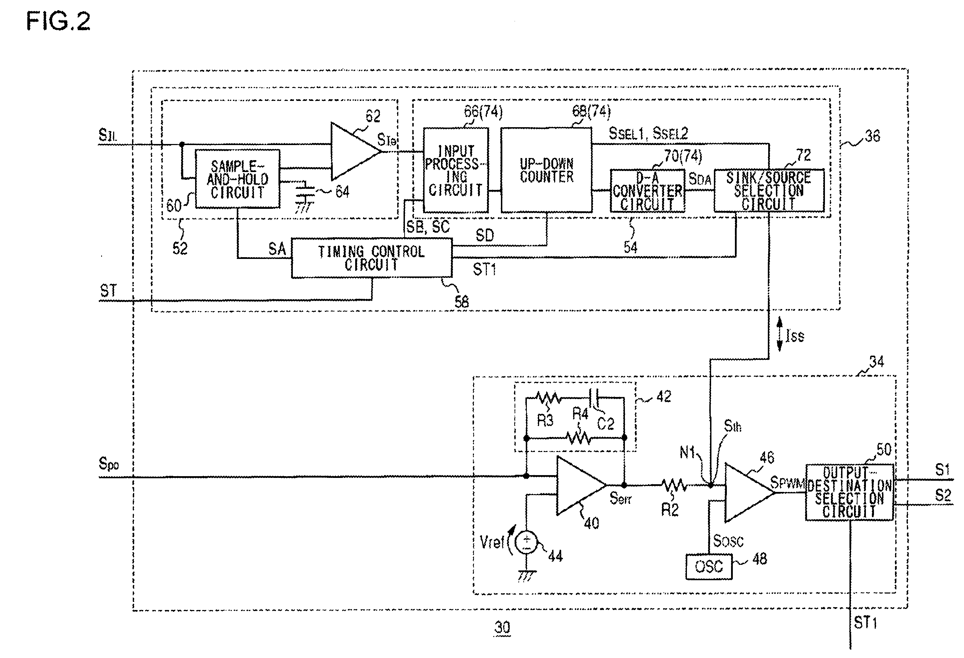

FIG. 2 is a circuit diagram showing a configuration of a PWM generating circuit 30. The PWM generating circuit 30 includes a master control circuit 34 and a slave control circuit 36.
The master control circuit 34 receives a power information signal Sₚₒ. The master control circuit 34 outputs a PWM signal S_{pwm}, whose duty ratio is adjusted to make the difference between the power information and a reference voltage Vref smaller, to the gate of the first switching element M1 in the first state φ1 and to the gate of the second switching element M2 in the second state φ2. In the second state φ2, the duty ratio of the PWM signal S_{pwm}, is further adjusted by a sink/source current Iₛₛ which is inputted from the slave control circuit 36. The master control circuit 34 determines whether to output the PWM signal S_{pwm} to the gate of the first switching element M1 or to the gate of the second switching element M2, based on the inverter signal ST1.
It is to be noted that the reference voltage Vref is set to a value corresponding to the target power Po.

The power information signal Sₚₒ meant here, which is generated by the arithmetic circuit 32, is a signal indicating the drive power PL being supplied to the discharge lamp 4.
The inverter signal ST1 is a signal which has a lighting frequency f1 and controls the switching between the first state φ1 and the second state φ2. Specifically, it is a signal that is asserted (going high, for instance) in the first state φ1 and negated (gong low, for instance) in the second state φ2.

The slave control circuit 36 monitors the current information signal S_{TL} and brings, in the second state φ2, the drive power to be outputted to the discharge lamp 4 by the second DC-DC converter CONV2 in the active state closer to the drive power outputted to the discharge lamp 4 by the first DC-DC converter CONV1 in the active state by adjusting the duty ratio of the PWM signal S_{pwm}. To adjust the duty ratio, the slave control circuit 36 supplies a sink/source current Iₛₛ to the master control circuit 34.
The slave control circuit 36 turns off in the first state φ1 and does not supply the sink/source current Iₛₛ.

The current information signal S_{IL} meant here is a signal generated, from the current sensing signal S7 , by the arithmetic circuit 32 and indicates a lamp current IL.
Note that the slave control circuit 36 performs a control of bringing the lamp current in the first state φ1 and the lamp current in the second state φ2 closer to each other. Although there may be a method of controlling the drive power based on information on both the drive voltage VL and the lamp current IL, the control can be made simpler if the drive power is controlled by either one of them, The inventors know from their experiences as those having ordinary skill in the art that the lamp current IL is better indicative of the drive power outputted to the discharge lamp 4 than the drive voltage VL. Accordingly, the drive power can be more suitably controlled by the use of the lamp current IL as a control parameter.

The master control circuit 34 includes an error amplifier 40, a phase compensation circuit 42, a reference voltage source 44, an error output resistor R2, a PWM comparator 46, an oscillator 48, and an output-destination selection circuit 50.
The error amplifier 40 outputs an error output signal Sₑᵣᵣ by amplifying the error between the voltage of the power information signal Sₚₒ and the reference voltage Vref generated by the reference voltage source 44. The error output signal Sₑᵣᵣ is inputted to the PWM comparator 46 through the error output resistor R2. A sink/source current Iₛₛ from the slave control circuit 36 is supplied to a first connection node N1 which is between the error output resistor R2 and an input terminal of the PWM comparator 46. The signal at the first connection node N1 is called a threshold signal Sₜₕ. The voltage of the threshold signal Sₜₕ drops when the sink/source current Iₛₛ flows from the first connection node N1 to the slave control circuit 36 (sink), whereas the voltage of the threshold signal Sₜₕ rises when the sink/source current Iₛₛ flows from the slave control circuit 36 to the first connection node N1 (source). In other words, the sink/source current Iₛₛ adds an offset to the error output signal Sₑᵣᵣ.

The phase compensation circuit 42 compensates the phase of the error output signal Sₑᵣᵣ with respect to the power information signal Sₚₒ, thereby preventing the oscillation of the entire arithmetic circuit 32. The phase compensation circuit 42 includes a series circuit comprised of a phase compensation capacitor C2 and a first phase compensation resistor R3 connected in series and a second phase compensation resistor R4. This series circuit and the second phase compensation resistor R4 are connected in parallel with each other between the power information signal Sₚₒ and the error output signal Sₑᵣᵣ.
In order to prevent the oscillation of the entire arithmetic circuit 32, a time constant T2 of the phase compensation circuit 42 is set longer than the inverse of the PWM frequency f2 of the PNM signal S_{pwm}. Accordingly, a control is performed in such a manner as to bring the average value of the drive power outputted to the discharge lamp 4 by the first DC-DC converter CONV1 and the drive power outputted to the discharge lamp 4 by the second DC-DC converter CONV2, with the time constant T2 of the phase compensation circuit 42 set as mentioned above, closer to the target power Po.
The PWM frequency f2 is set to 400 kHz, for instance.

The oscillator 48 generates a periodical signal Sₐₛₑ having a periodical voltage of triangular or sawtooth waveforms of a PWM frequency f2.
The PWM comparator 46 generates a PWM signal S_{pwm} by comparing the threshold signal Sₜₕ with the periodical signal S_{cse}. As the voltage of the threshold signal Sₜₕ changes on account of the sink/source current Iₛₛ, the duty ratio of the PWM signal S_{pwm} also changes. [0042] The output-destination selection circuit 50, which receives an inverter signal ST1 and a PWM signal S_{pwm}, outputs the PWM signal S_{pwm} as a first control pulse signal S1 to the first switching element M1 when the inverter signal ST1 is high. Also, the output-destination selection circuit 50 fixes a second control pulse signal S2 at a low level and turns off the second switching element M2.
The output-destination selection circuit 50 outputs the PMM signal S_{pwm} as a second control pulse signal S2 to the second switching element M2 when the inverter signal ST1 is low. Also, the output-destination selection circuit 50 fixes a first control pulse signal S1 at a low level and turns off the first switching element M1.

The slave control circuit 36, which receives a current information signal S_{IL} and a timing signal ST, outputs a sink/source current Iₛₛ in the second state φ2. The slave control circuit 36 includes a current difference detection circuit 52, a sink/source output circuit 54, and a timing control circuit 58 .
The timing control circuit 58 controls the timing of operation of the current difference detection circuit 52 and the sink/source output circuit 54. The current difference detection circuit 52 holds a current information signal S_{IL} in the first state φ1 and generates a current error signal S_{Ie} corresponding to the relationship between the current information signal S_{IL} in the first state φ1 and the current information signal S_{IL} in the second state φ2. The sink/source output circuit 54 generates the sink/source current Iₛₛ based on the current error signal S_{Ie} in the second state φ2,

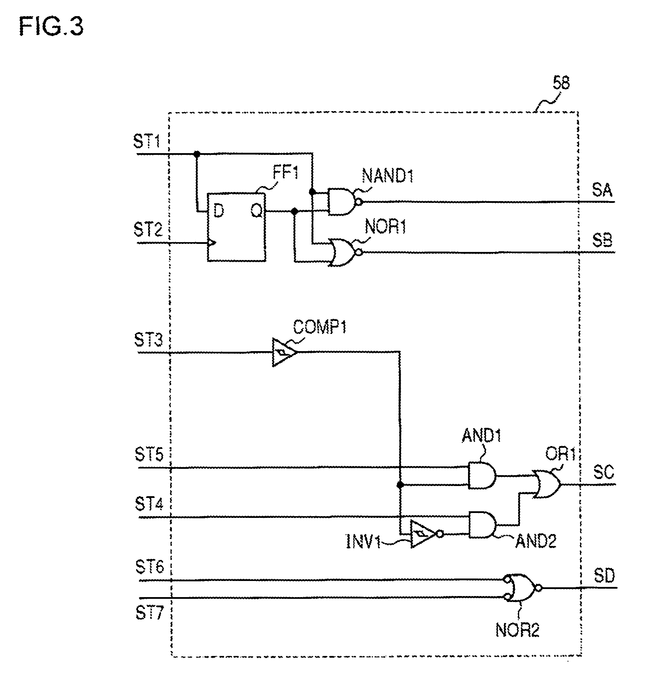

FIG. 3 is a circuit diagram showing a configuration of a timing control circuit 58, Receiving timing signals ST, the timing control circuit 58 outputs an SH timing signal SA to a sample-and-hold circuit 60 (described later), a counter operation permission signal SB and a counter clock signal SC to an input processing circuit 66 (described later), a counter initialization signal SD to an up-down counter 68 (described later, and an inverter signal ST1 to a sink/source selection circuit 72 (described later).
The SH timing signal SA is asserted (going high, for instance) in the second state φ2 and negated (goring low, for instance) after a delay period T3 from the end of the second state φ2.
The counter operation permission signal SB is negated (going low, for instance) in the first state φ1 and asserted (going high, for instance) after a delay period T3 from the end of the first state φ1.
The counter clock signal SC becomes a predetermined clock signal when the average value Pa of the drive power PL is smaller than a predetermined threshold power Pₜₕ. And the counter clock signal SC becomes a clock signal having a frequency higher than that of the predetermined clock signal when the average value Pa thereof is larger.
The counter initialization signal SD is negated (going low, for instance) before the lighting of the discharge lamp 4.

The timing control circuit 58 includes a first D flip-flop FF1, a first NAND gate NAND1, a first NOR gate NOR1, a first comparator COMP1, a first AND gate AND1, a second AND gate AND2, a first OR gate OR1, a second NOR gate NOR2, and a first inverter INV1. Each of the signals outputted by the timing control circuit 58 will now be explained.

### 1. SH timing signal SA and counter operation permission signal SB

An inverter delay signal ST2 is inputted to a clock terminal of the first D flip-flop FF1. The inverter delay signal ST2 is a signal that goes low only during a predetermined delay period T3 from the edge of an inverter signal ST1. An inverter signal ST1 is inputted to a data terminal of the first D flip-flop FF1. Upon detection of a rising edge of the inverter delay signal ST2, the first D flip-flop FF1 stores the state of the inverter signal ST1 inputted to the data terminal at that point and outputs the stored state thereof from the output terminal.
The delay period T3 is set to be 200 µs, for instance.

The first NAND gate NAND1 receives an inverter signal ST1 and an output signal of the first D flip-flop FF1, and outputs an SH timing signal SA.
The first NOR gate NOR1 receives the inverter signal ST1 and the output signal of the first D flip-flop FF1, and outputs a counter operation permission signal SB.

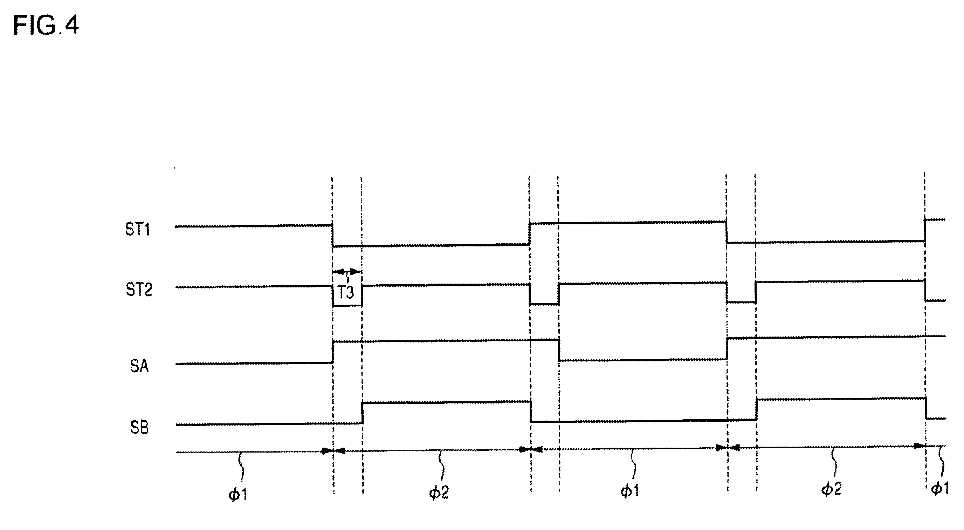

FIG. 4 is a timing chart showing the waveforms of the inverter signal ST1 and inverter delay signal ST2 versus the waveforms of the SH timing signal SA and counter operation permission signal SB. The inverter signal ST1 goes high in the first state φ1 and goes low in the second state φ2. The inverter delay signal ST2 goes low only during a delay period T3 from the edge of the inverter signal ST1 and goes high during periods other than that. The SH timing signal SA is such that its rising edge is synchronized with the falling edge of the inverter signal ST1 and its falling edge delays by a delay period T3 from the rising edge of the inverter signal ST1. The counter operation permission signal SB is such that its falling edge is synchronized with the rising edge of the inverter signal ST1 and its rising edge delays by a delay period T3 from the falling edge of the inverter signal ST1.

### 2. Counter clock signal SC

Refer back to FIG. 3. The first comparator COMP1 is a Schmitt trigger comparator that receives a power correlation signal ST3 and compares the received signal ST3 with a predetermined threshold voltage. Note that the power correlation signal ST3, which is a signal generated by the arithmetic circuit 32, is a. signal correlated with the drive power PL supplied to the discharge lamp 4. In particular, the higher the average value Pa of the drive power PL, the lower the voltage of the power correlation signal ST3 will be. When the average value Pa of the drive power PL falls below the threshold power Pₜₕ, the output signals of the first comparator COMP1 goes high.

The low-speed clock signal ST5 and the output signal of the first comparator COMP1 are inputted to the first AND gate AND1.
The high-speed clock signal ST4 is inputted to one of the input terminals of the second AND gate AND2. The output signal of the first comparator COMP1 is inputted to the other thereof via the Schmitt-trigger first inverter INV1.
The first OR gate OR1 receives the output signal of the first AND gate AND1 and the output signal of the second AND gate AND2, and outputs a counter clock signal SC,
The low-speed clock signal ST5 is a clock signal which determines the speed of a counter in a sink/source amount determining circuit 74 (described later) and is a clock signal of 5 kHz, for instance.
The high-speed clock signal ST4 is a clock signal which has a clock frequency higher than that of the low-speed clock signal ST5, and is a clock signal of 10 kHz, for instance.
Thus, the counter clock signal SC becomes a signal equivalent to the low-speed clock signal ST5 when the average value Pa of the drive power PL is smaller than the predetermined threshold power Pₜₕ and a clock signal equivalent to the high-speed clock signal when it is larger.

### 3. Counter initialization signal SD

The second NOR gate NOR2 receives the logical inversion of the reset signal ST6 and the logical inversion of light-off signal ST7, and outputs a counter initialization signal SD. It is to be noted here that the reset signal ST6 is a signal, generated by the arithmetic circuit 32, which goes low in a reset state of the discharge lamp lighting circuit 100. The reset state corresponds to, for example, a situation where the value of lamp current IL or drive voltage VL reveals the abnormality or a situation immediately after the discharge lamp lighting circuit 100 is activated. The light-off signal ST7 is a signal that goes high when the discharge lamp 4 lights up.
As either of the reset signal ST6 and the light-off signal ST7 goes low, the counter initialization signal SD goes low.

Refer back to FIG. 2. The current difference detection circuit 52 includes a sample-and-hold circuit 60, a drive current comparator 62, and a sample-and-hold capacitor

The sample-and-hold Circuit 60 samples the current information signal S_{IL} by charging and discharging the sample-and-hold capacitor 64 while the SH timing signal SA is at a low level. The sample-and-hold circuit 60 prohibits the charging and discharging by setting the input to the sample-and-bold capacitor 64 in a high-impedance state when the SH timing signal SA goes high. The sample-and-hold circuit 60 holds the current information signal S_{IL} just before the SH timing signal SA goes high, and then outputs it.

The drive current comparator 62 outputs the current error signal S_{Ie} which is asserted (going high, for instance) when the voltage of the current information signal S_{IL} is higher than the output voltage of the sample-and-hold circuit 60. The current error signal S_{Ie} indicates whether the current information signal S_{IL} in the second state φ2 is larger or smaller than the current information signal S_{IL} in the first state φ1 just before said second state φ2.

The sink/source output circuit 54 includes an input processing circuit 66, an up-down counter 68, a digital-to-analog converter circuit 70 (hereinafter referred to as "D-A converter circuit 70" also), and a sink/source selection circuit 72. The input processing circuit 66, the up-down counter 68 and the D-A converter circuit 70 constitute a sink/source amount determining circuit 74.

The sink/source amount determining circuit 74 counts up or down a digital value ND indicating the absolute value of the sink/source current Iₛₛ, based on the current error signal S_{Ie}. This digital value ND is counted at the speed prescribed by the counter clock signal SC during a period when the counter operation permission signal SB permits the counting, namely, during a high level. The digital value ND is initialized when the counter initialisation signal SD is changed to be low.
The sink/source amount determining circuit 74 converts the digital value ND into an analog value and supplies the analog value to the sink/source selection circuit 72. In the second state φ2, the sink/source selection circuit 72 generates a sink/source current Iₛₛ based on the analog value thus supplied, and outputs the sink/source current Iₛₛ to the master control circuit 34.

The speed at which the power of the slave control circuit 36 corresponding to the frequency of the counter clock signal SC is controlled is set at least twice slower than the speed at which the power of the master control circuit 34 corresponding to the response speed of the error amplifier 40 is controlled. This is to suppress interference between the slave control circuit 36 and the master control circuit 34.

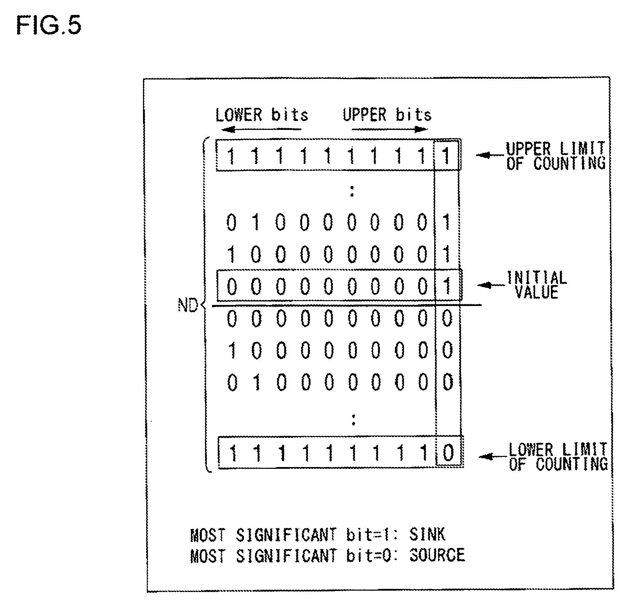

FIG. 5 illustrates how digital values ND in the sink/source amount determining circuit 74 are counted. The sink/source amount determining circuit 74 generates a 10-bit digital value ND which is counted up when the current error signal S_{Ie} is at a high level and counted down when it is at a low level during a period when the counter operation permission signal SB is at a high level. FIG. 5 illustrates how such a digital value ND is counted. The tenth bit, which is the most significant bit of a digital value ND, indicates whether it belongs to either "sink" or "source"; a high level (1) corresponds to "sink" and a low level (0) corresponds to "source". The retaining nine bits of the digital value correspond to the absolute value of the sink/source current Iₛₛ. An upper limit is set in the count-up direction, and a lower limit is set in the count-down direction, thus preventing the sunk/sourced current from becoming excessive.

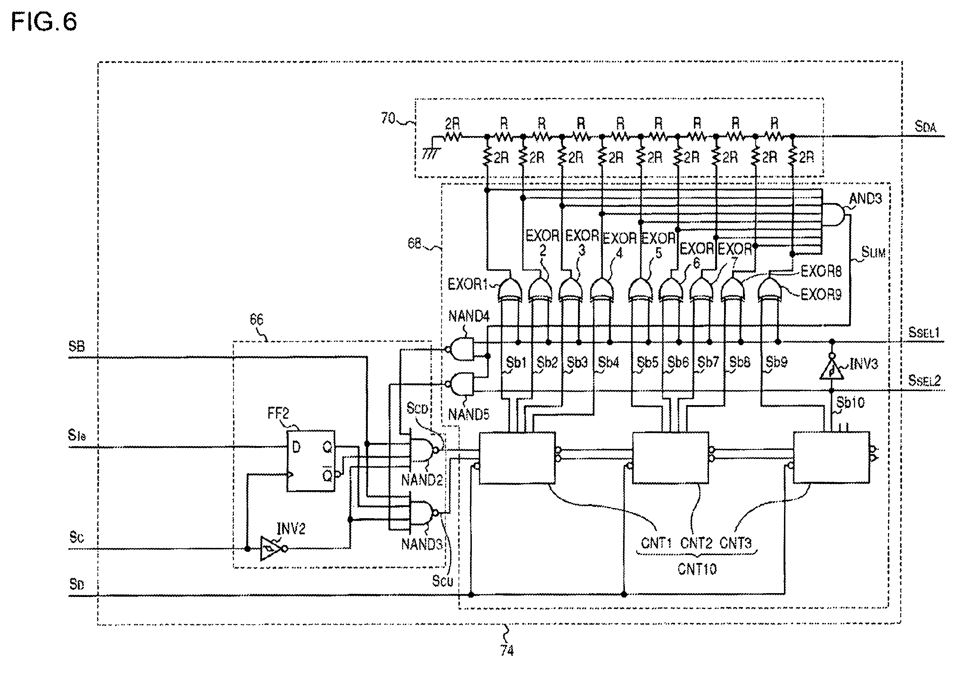

FIG. 6 is a circuit diagram showing a configuration of the sink/source amount determining circuit 74.
The input processing circuit 66 includes a second D flip-flop FF2, a second inverter INV2, a second NAND gate NAND2, and a third NAND gate NAND3. The counter clock signal SC is inputted to a clock terminal of the second D flip-flop FF2. The current error signals S_{Ie} is inputted to a data terminal of the second D flip-flop FF2.

The second NAND gate NAND2 receives a counter operation permission signal SB, an inverted output signal of the second D flip-flop FF2, a counter clock signal SC inverted by the Schmitt-trigger second inverter INV2, and an output signal of a fourth MAND gate NAND4 (described later) so as to generate a count-down clock S_{CD}.
The third NAND gate NAND3 receives a counter operation permission signal SB, an output signal of the second D flip-flop FF2, a counter clock signal SC inverted by the Schmitt-trigger second inverter INV2, and an output signal of a fifth NAND gate NAND5 (described later) so as to generate a count-up clock S_{CU}.

An up-down counter 63 includes a first 4 bit up-down counter CNT1, a second 4-bit up-down counter CMT2, a third 4-bit up-down counter CNT3, a fourth NAND gate NAND4, a fifth NAND gate NAND5, a third inverter INV3, a first EXOR gate BXOR1 to a ninth EXOR gate EXOR9, and a third AND gate WAND3.

Known 4-bit up-down counters, such as "74HC193" produced by Philips semiconductor Inc., are used as the 4-bit up-down counters CNT1 to CNT3. Also, the first 4-bit up-down counter CNT1, the second 4-bit up-down counter CNT2 and the third 4-bit up-down counter CNT3 are connected with each other by the use of a known technique so that they can constitute a 10-bit up-down counter CUNT10 which performs the counting upon receipt of the count-down clock S_{CD} and the count-up clock S_{CU}. The 10-bit up-down counter Cunt10 thus configured is initialized by the counter initialization signal SD.

Receiving the tenth bit signal Sb10 of the 10-bit up-down counter CNT10, the Schmitt-trigger third inverter INN3 inputs its logic inverted value to the first EXOR gate EXOR1 to the ninth EXOR gate EXOR9, respectively, and outputs the logic inverted value as a first sink/source selection signal S_{SEL}1. The tenth bit signal Sb10 is outputted as a second sink/source selection signal S_{SEL}2. The first to ninth signals Sb1 to Sb9 corresponding respectively to the first to ninth bits of the 10-bit up-down counter CNT10 are inputted to the first EXOR gate EXOR1 to the ninth EXOR gate EXOR9, respectively. The third AND gate AND3 receives the output signals of the first EXOR gate EXOR1 to ninth EXOR gate EXOR9, and outputs a count-limit signal S_{LIM} that goes high when all of these output signals are at high levels.

The count-limit signal S_{LIM} and the output signal of the third inverter INV3 are inputted to the fourth NAND gate NAND4. When all of the first to tenth bits of the 10-bit up-down counter CNT10 are at low levels, the fourth NAND gate NAND4 fixes the output of the second NAND gate NAND2 to a high level so as to prohibit the counting-down, thereby setting the lower limit of the digital values ND.
The count-limit signal S_{LIM} and the tenth bit signal Sb10 are inputted to the fifth NAND gate NAND5. When all of the first to tenth bits of the 10-bit up-down counter CNT10 are at high levels, the fifth NAND gate NANS fixes the output of the third NAND gate AND3 to a high level so as to prohibit the counting-up, thereby setting the upper limit of the digital values ND.

Note here that the first to ninth bits of the digital value ND correspond respectively to the output signals of the first EXOR gate EXOR1 to the ninth EXOR gate EXOR9 as shown in FIG. 6, and the tenth bit of the digital value ND correspond to the tenth bit signal Sb10 as shown in FIG. 6.

The 9-bit digital value, which is the combined output signals of the first EXOR gate EXOR1 to the ninth EXOR gate EXOR9, is converted to a sink/source amount specifying signal S_{DA}, which is an analog value, by a known ladder resistor D-A converter circuit 70.

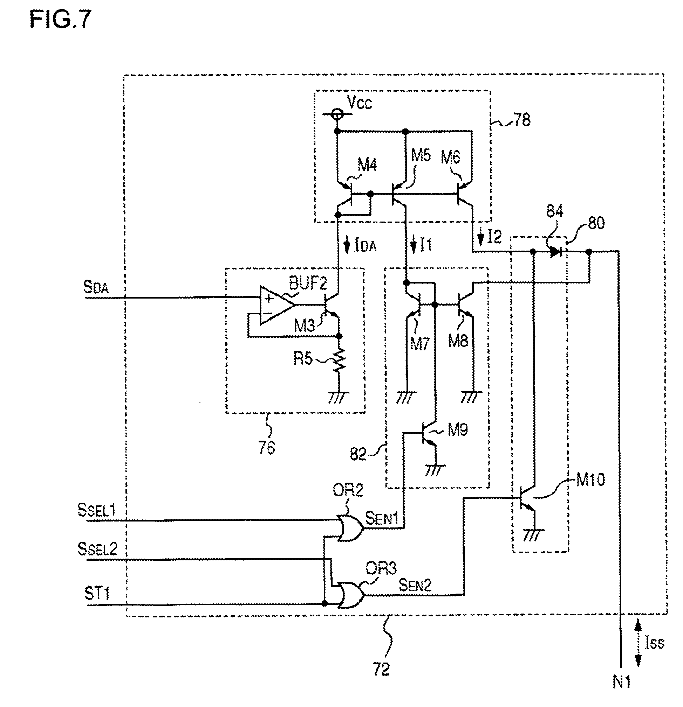

FIG. 7 is a circuit diagram showing a configuration of a sink/source selection circuit 72. The sink/source selection circuit 72 includes a voltage-to-current converter circuit 76, a current generator 78, a current source unit 80, a current sink unit 82, a second OR gate OR2, and a third OR gate OR3.
The voltage-to-current converter circuit 76 receives the sink/source amount specifying signal S_{DA} and then converts the voltage thereof into a sink/source amount specifying current I_{DA}. The voltage-to-current converter circuit 76 includes a second buffer BUF2, a first transistor M3 such as a bipolar transistor, and a current conversion resistor R5. A sink/source amount specifying signal S_{DA} is inputted to an non-inverting input terminal of the second buffer BUF2. An output terminal of the second buffer BUF2 is connected to a base of the first transistor M3. An emitter of the first transistor M3 is fed back to an inverting input terminal of the second buffer BUF2 and is connected to the current conversion resistor R5 one end of which is grounded. This configuration causes the sink/source amount specifying current I_{DA}, which is equal to V_{DA}/R5, to flow into a collector of the first transistor M3 where V_{DA} is a voltage of the sink/source amount specifying signal S_{DA}.

The current generator 78 supplies a sink current I1 to the current sink unit 82. Here, the value of the sink current I1 is equal to that of the sink/source amount specifying current I_{DA} generated by the voltage-to-current converter circuit 76. Also, the current generator 78 supplies a source current I2 to the current source unit 80. Here, the value of the source current I2 is equal to that of the sink/source amount specifying current I_{DA}. The current generator 78 includes first to third bipolar transistors M4, M5 and M6 wherein a power supply voltage Vcc is applied to each emitter of the first to third bipolar transistors M4, M5 and M6 and the bases thereof are connected in common. A collector of the first bipolar transistor M4 is connected to the collector of the first transistor M3, and the collector and the base of the first bipolar transistor M4 are connected to each other. The second bipolar transistor M5 supplies the sink current I1 from the collector thereof to the current sink unit 82. The third bipolar transistor M6 supplies the source current I2 from the collector thereof to the current source unit 80.

The second OR gate OR2 receives the first sink/source selection signal S_{SEL}1 and the inverter signal ST1, and then outputs a sink enable signal 5_{EN}1. When the tenth bit signal Sb10 is low, the first sink/source selection signal S_{SEL}1 goes high and thus the sink enable signal S_{SN}1 goes high.
The third OR gate OR3 receives the second sink/source selection signal S_{SEL}1 and the inverter signal ST1, and then outputs a source enable signal S_{EN}2. When the tenth bit signal Sb10 is high, the second sink/source selection signal S_{SEL}2 goes high and thus the source enable signal S_{EN}2 goes high.

The current sink unit 82 receives the sink current I1 and, if the sink enable signal S_{EN}1 is low, pulls the sink/source current Iₛₛ from the first connection node N1, the value of which is equal to that of the sink current I1. The current sink unit. 82 includes fourth to sixth bipolar transistors M7, M8 and M9. The fourth bipolar transistor M7 and the fifth bipolar transistor M8 are of a so-called current mirror structure, so that the sink current I1 is inputted to the fourth bipolar transistor M7 on a reference side thereof. The sink enable signal S_{EN}1 is inputted to a gate of the sixth bipolar transistor M9, so that a base of the fourth bipolar transistor M7 is set to a ground potential while the sink enable signal S_{EN}1 is high. An output-side collector of the fifth bipolar transistor M8 pulls the sink/source current I_{SS}, which is equal to the sink current I1, from the first connection node N1 while the sink enable signal S_{EN}1 is low.

The current source unit 80 receives the source current I2 and then supplies the sink/source current Iₛₛ, the value of which is equal to that of source current I2 if the source enable signal S_{EN}2 is low, to the first connection node N1. The current source unit 80 includes a diode 84 and a seventh bipolar transistor M10. The source current I2 is supplied to a connection node of a collector of the seventh bipolar transistor M10 and an anode of the diode 84. The source enable signal S_{EN}2 is inputted to a base of the seventh bipolar transistor M10. While the source enable signal S_{EN}2 is high, the source current I2 flows to the ground through the seventh bipolar transistor M10. While the source enable signal S_{EN}2 is low, the current source unit 80 supplies the sink/source current Iₛₛ, which is equal to the source current I2, to the first connection node N1.

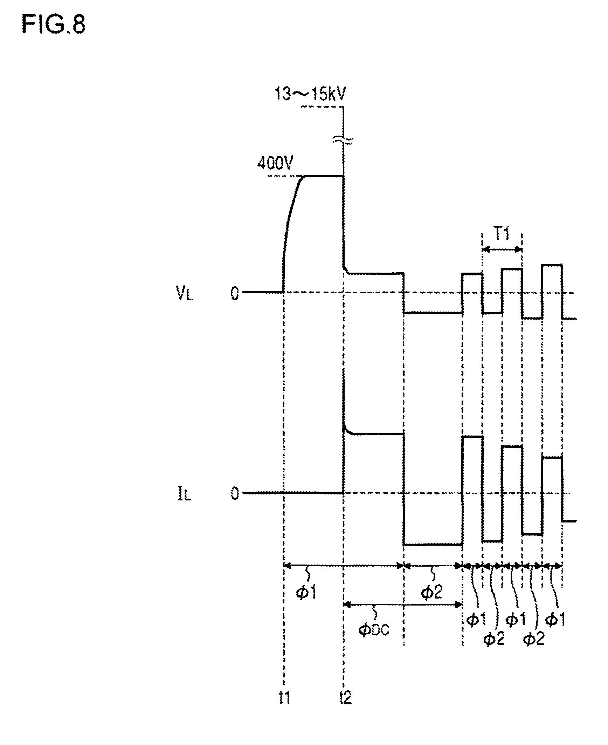

The above has described the structure of the discharge lamp lighting circuit 100. A description is now given of an operation thereof following the sequences. FIG. 8 is a timing chart showing an operating state of the discharge lamp lighting circuit 100. The vertical axis and the horizontal axis in FIG. 8 are scalped as appropriate for ease of understanding, and each waveform shown in FIG. 8 is simplified for easier understanding.

### 1. Power on

As a user turns on the power supply switch 8 at time t1, the discharge lamp lighting circuit 100 is started. The control circuit 10 sets the first DC-DC converter CONV1 to the active state and the first switch SW1 to an off state (the first state φ1), and boosts the battery voltage Vbat to a predetermined high voltage (400 V) and stabilize it. Specifically, the control circuit 10 adjusts the duty ratio of the first switching element M1 through the master control circuit 34 so that the output voltage Vol of the first DC-DC converter CONV1 becomes 400 V.

### 2. Breakdown

The starter circuit 20 receives the voltage Vol. of 400 V generated by the first DC-DC converter CONV1. The pulse generator 28 applies a pulse voltage of 400 V amplitude to the primary coil 24 of the starter transformer 22. At this time, as shown in FIG. 8A a high-voltage pulse of 20 kV or more occurs in the secondary coil 26 of the starter transformer 22. As a result, the drive voltage of the discharge lamp 4 rises to about 13 to 15 kv and breaks down to start a glow discharge at time t2.

### 3. DC period φ_{DC}

After a breakdown, the control circuit 10 performs a control of firstly delivering the lamp current IL in the first state φ1, for about 10 ms, in the first polarity. Then the control circuit 10 switches the state to the second state φ2 and performs a control of delivering the lamp current IL for about 10 ms in the second polarity. This period is called a DC period φ_{DC}. In this DC period φ_{DC}, a transition is made from the glow discharge to an arc discharge.

In the first state φ1 of this DC period φ_{DC}, the master control circuit 34 brings the drive power outputted by the first DC-Dc converter CONV1 to a target power by controlling the duty ratio of the first switching element M1. The slave control circuit 36 samples the lamp current IL.
In the second state φ2 after the first state φ1, the master control circuit 34 controls the duty ratio of the second switching element M2. The slave control circuit 36 supplies the sink/source current Iₛₛ to the master control circuit 34 and further controls the duty ratio of the second switching element M2, thereby reducing the difference between the lamp current IL sampled and held in the first state φ1 and that in the second state φ2.

As the arc discharge stabilizes after the DC period φ_{DC}, the control circuit 10 controls the first DC-DC converter CONV1, the second DC-DC converter CONV2, the first switch SW1 and the second switch SN2 so as to repeat the first state φ1 and the second state φ2 alternately on the cycle T1. The same control as the above-described control performed in the first state φ1 and the second state φ2 of the DC period φ_{DC} is performed even after the DC period φ_{DC}.

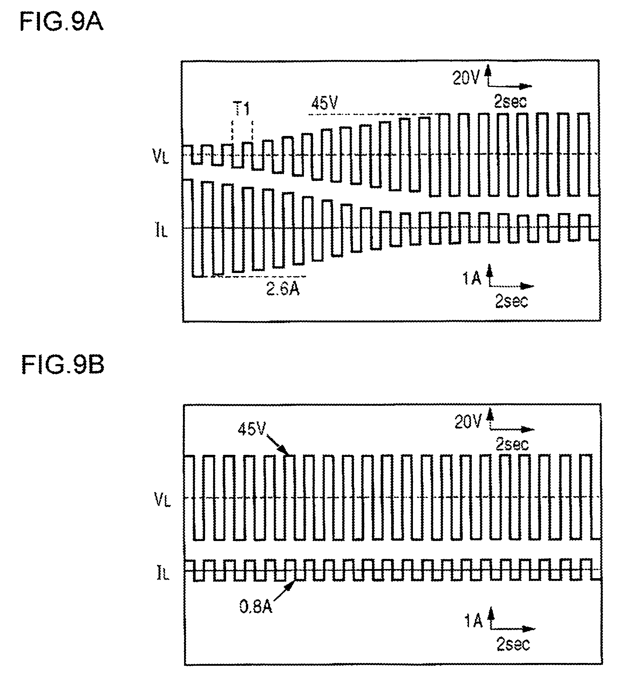

FIGS. 9A and 9B are timing charts showing operating states after the DC period of the discharge lamp lighting circuit 100. The vertical axis and the horizontal axis in FIGS. 9A and 9B are scalped as appropriate for ease of understanding, and each waveform shown in FIGS. 9A and 9B is simplified for easier understanding. FIGS. 9A and 9B shows waves in a run-up process and a steady lighting period, respectively.

### 4. Run-up

The light output of the discharge lamp 4 rises with growth in the ark discharge. The way the light output rises is specified in a standard. Thus, the control circuit 10 monitors the first output voltage Vol, the second output voltage Vo2 and the lamp current IL and adjusts, by feedback, the duty ratio of the on and off of the first switching element M1 and the second switching element M2 so that the light output (electric power) complied with the standard can be obtained. The discharge lamp lighting circuit 100 raises rapidly the light output of the discharge lamp 4 in a run-up period and therefore an overpower higher than the rated power is temporarily supplied. After this, the lamp voltage and the lamp current IL are stabilized at approximately 45 V and 0.8 A, respectively, so that supplied power is brought closer to the rated power (35 W) (See FIG. 9A).

### 5. Steady lighting

As the light output of the discharge lamp 4 has stabilized after going through the run-up process, the power supplied to the discharge lamp 4 is stabilised at the rated value of 35 W (See FIG. 9B). Note that the waveforms of drive voltage VL and lamp current IL shown in FIGS. 9A and 9B, which are presented in a simplified manner for the ease of viewing, practically have a frequency range of 250 Hz to 750 Hz.

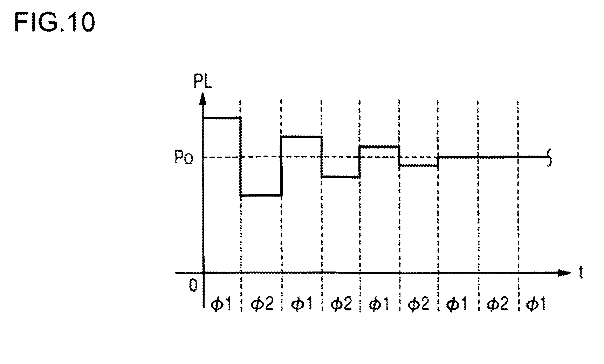

Operations of the discharge lamp lighting circuit 100 in the DC period φ_{DC} and in a run-up state and a steady lighting state are further examined here. Considered here is a case where both the drive power supplied in the first state φ1 and the drive power supplied in the second state φ2 vary due to variations in circuit elements even though the first control pulse signal S1 and the second control pulse signal S2 each has the identical duty ratio. The variations in circuit elements meant here include the differences between the characteristics of the first transformer 14 and those of the second transformer 16, the difference between the characteristics of the first switching element M1 and those of the second switching element M2, and the difference between the characteristics of first rectifier diode D1 and those of the second rectifier diode D2. FIG. 10 is a graph showing how the drive power is controlled. In FIG. 10, the horizontal axis represents time, and the vertical axis represents the magnitude of drive power. FIG. 10 illustrates how the varying drive power converges to the target power Po. In the first state φ1, a control is performed to bring the drive power PL closer to the target power Po. Thus, directing attention to the first state φ1 only, the drive power PL gradually gets closer to the target power Po. In the second state φ2, a control is performed to bring the drive power PL closer to the drive power of the first state φ1. In this manner, the drive power in the second state φ2 becomes equal to the drive power in the first state φ1, so that both the drive powers agree with the target power Po.

The above has described the operation of the discharge lamp lighting circuit 100 according to the present embodiment. This discharge lamp lighting circuit 100 has the following advantages over the conventional discharge lamp lighting circuits.

(1) By employing the discharge lamp lighting circuit 100 according to the present embodiment, both the first switching element M1 and the second switching element M2 are controlled by a common PWM signal generated by the master control circuit 34. This structure and function ensure a reduced number of terminals and reduced circuit scale when compared with a structure having independent control systems for the first DC-DC converter CONV1 and the second DC-DC converter CONV2. respectively. Furthermore, this structure can reduce the number of components such as outside parts, thereby cutting down the cost.

(2) Also, the control circuit 10 brings the drive power outputted in the second state φ2 closer to the drive power outputted in the first state φ1. Therefore, the drive powers in the first state φ1 and the second state φ2 can be equalized even when there are variations in the characteristics of circuit elements used for the DOC-DOC converters.

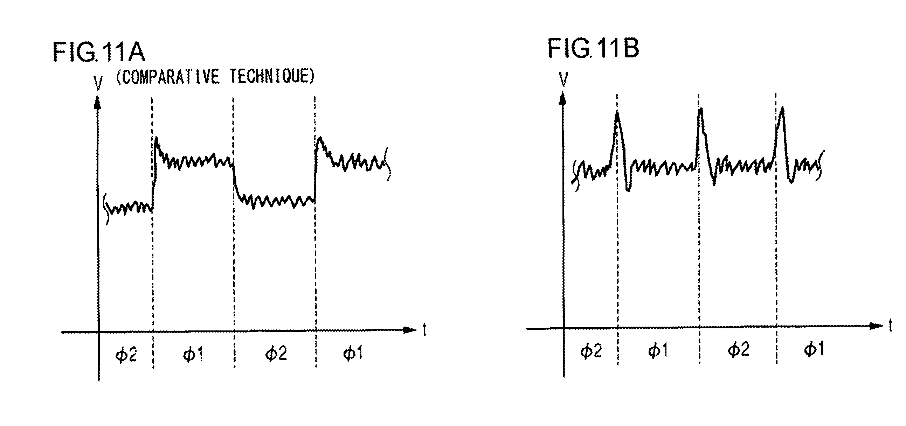

FITS. 11A and 11B are waveforms diagrams based on actual measurement values according to a comparative technique and according to the present embodiment, respectively. In FIGS. 11A and 11B, the horizontal axis represents time, and the vertical axis the drive power. FIG. 11A shows the waveforms of drive voltages in the first state φ1 and the second state φ2 when a control method according to a comparative technique is used where the control of bringing the drive power in the second state φ2 closer to that in the first state φ1 is not performed. Instead of the discharge lamp, a resistor is used as a device to be driven in the discharge lamp lighting circuit 100, so that the magnitude of drive voltage indicates the magnitude of drive power. Also, the characteristics of circuit elements used for the first DC-DC converter and the second DC-DC converter are varied artificially. Due to the variations caused on purpose, the output power in the first state φ1 and the output power in the second state φ2 vary.
FIG. 11B shows the waveforms of drive voltages in the first state φ1 and the second state φ2 when the control method according to the present embodiment is used. It is clear from FIG. 11B that the output power in the first state φ1 and the output power in the second state φ2 agree with each other quire satisfactorily.

(3) In the discharge lamp lighting circuit 100 according to the present embodiment, the control circuit 10 initially is set in the first state φ1, which serves as a reference, as the discharge lamp 4 breaks down to start lighting. That is, the control circuit 10 initially sets the first DC-DC converter CONV1 in the active state. Thus, the control in the next second state φ2 can obtain the drive power of the first state φ1 that the drive power of the next second state φ2 should be brought to. Thereby, the equalization of drive power can be achieved faster.

(4) Also, the larger the average value of drive power, the higher the clock frequency of counting in the sink/source amount determining circuit 74 will be set by the control circuit 10. As a result, the counting speed becomes faster. Thus, if the average value of drive power is large (e.g., immediately after the discharge lamp 4 lights up), the drive power can be equalize faster. Conversely, if the lighting of the discharge lam 4 stabilizes and the average value of drive power becomes smaller than the threshold power, the counting speed will be slower. Hence, the possibility that the power control by the slave control circuit 36 and the power control by the master control circuit 34 interfere with each other (e.g., oscillation occurring therebetween) can be reduced.

(5) Also, the SH timing signal SA goes high in the second state φ2 and goes low after a delay period T3 from the end of the second state φ2. Thus the sample-and-hold circuit 60 starts to sample the current information signal S_{IL} after a delay period T3 from the end of the second state φ2. This can prevent the unstable control resulting from the case when the sample-and-hold circuit 60 starts to sample before the second state φ2, during which the sink/source current Iₛₛ is supplied by the slave control circuit 36, has not ended.

(6) Immediately after the polarity of the lamp current IL has been switched, the value of the lamp current IL is not easily stabilized. Thus, by employing the discharge lamp lighting circuit 100 according to the present embodiment, the counter operation permission signal SB becomes a signal that goes low in the first state φ1 and goes high after the delay period T3 from the end of the first state φ1, so that the sink/source amount determining circuit 74 starts to count after the delay period T3 from the end of the first state φ1. Hence, the sink/source amount determining circuit 74 can perform the counting during the period except for the period during which the value of the lamp current IL is not easily stabilized, so that the control can be performed more stably.
The value of the delay period T3 may be set through experiments so that it is longer than a period during which the value of the lamp current IL is not easily stabilized.

In the present embodiment, a description has been given of a case where the positive drive voltages Vo1 and Vo2 are generated and then applied to the discharge lamp 4 (called a positive lighting). In a modification, negative drive voltages Vo1 and Vo2 may be generated to drive the discharge lamp 4 (called a negative lighting). In such a case, the conducting directions of the first rectifier diode D1 and the second rectifier diode D2, the polarities of secondary windings of the first and second transformers T1 and T2, the switching directions of the switching elements M1 and M2 connected respectively to the secondary winding sides of the first and second transformers T1 and T2, and the conducting directions of rectifiers connected in parallel with said switching elements M1 and M2 may be reversed.

In the present embodiment, a description has been given of a case where the power information signal S_{PO} is a signal generated by the arithmetic circuit 32. However, this should not be considered as limiting and, for example, the power information signal may be generated based on the voltage of the sample-and-hold capacitor 64.

A microcomputer may be used in the control circuit 10 or a part of the discharge lamp lighting circuit 100 according to the present embodiment.

In the present embodiment, a description has been given of a case where the slave control circuit 36 adjusts the amount of current stunk or source by the up-down counter. However, this should not be considered as limiting and, for example, the slave control circuit may be implemented with a circuit having a transconductance amplifier and analog devices. It should be noted here that the structure, as found in the slave control circuit 36 of the discharge lamp lighting circuit 100 according to the present embodiment, in which the counter is used is suitable for an integrated structure.

Though in the present embodiment the automotive lamp has been described merely as a example, the applications of the present invention are not limited thereto and are widely applicable to a discharge lamp lighting circuit having two converters that supply power alternately to a discharge lamp.

In the circuits described in the present embodiment, the setting of logical values which are high level and low level of a given signal is merely exemplary and may be freely changed by inverting them as appropriate using an inverter or the like.

While embodiments of the present invention have been described using specific terms, the present invention is defined in the attached claims.

## Claims

1. A discharge lamp lighting circuit comprising:
a first DC-DC converter (CONV1) comprising a switching element (M1), the first DC-DC converter (CONV1) being arranged for supplying, in an active state, a first drive voltage to one end of a discharge lamp (4) to be driven;
a second DC-DC converter (CONV2) comprising a switching element (M2), the second DC-DC converter (CONV2) being arranged for supplying, in an active state, a second drive voltage to the other end of the discharge lamp (4);
a first switch (SW1), connected to the one end of the discharge lamp (4), for providing electrical conduction between the one end of the discharge lamp (4) and a fixed voltage terminal in an ON state;
a second switch (SW2), connected to the other end of the discharge lamp (4), for providing electrical conduction between the other end of the discharge lamp (4) and the fixed voltage terminal in an ON state; and
a control circuit (10) configured to supply an AC drive voltage to the discharge lamp (4) by alternately setting the discharge lamp lighting circuit between a first state (Φ1) and a second state (Φ2) in a predetermined lighting cycle and configured to bring an average value of output power of the first DC-DC converter (CONV1) in the active state and output power of the second DC-DC converter (CONV2) in the active state closer to a predetermined target power by controlling the duty ratio of on and off of the respective switching elements (M1, M2) of the first and second DC-DC converters (CONV1, CONV2),
wherein the control circuit (10), in the first state (Φ1), is configured to set the first DC-DC converter (CONV1) in the active state, to set the second DC-DC converter (CONV2) in the non-active state and to set the second switch (SW2) in the ON state,
wherein the control circuit (10), in the second state (Φ2), is configured to set the first DC-DC converter (CONV1) in the non-active state, to set the second DC-DC converter (CONV2) in the active state and to set the first switch (SW1) in the ON state,
**characterized in that**:-
the control circuit (10) includes a master circuit (34) and a slave circuit (36),
the master circuit (34) is configured to output a pulse modulation signal (S_{pwm}) to a control terminal of the switching element (M1) of the first DC-DC converter (CONV1) when the first DC-DC converter (CONV1) is in the active state and to a control terminal of the switching element (M2) of the second DC-DC converter (CONV2) when the second DC-DC converter (CONV2) is in the active state, wherein the duty ratio of the pulse modulation signal (S_{pwm}) is so controlled as to bring the average value of output power closer to the target power; and
the slave circuit (36) is configured to bring, while the second DC-DC converter (CONV2) is in the active state, the output power of the second DC-DC converter (CONV2) in the active state closer to the output power of the first DC-DC converter (CONV1) in the preceding active state by adjusting the duty ratio of the pulse modulation signal (S_{pwm}).

2. A discharge lamp lighting circuit according to Claim 1, wherein the control circuit (10) is configured to set the first DC-DC converter (CONV1) in the active state first as the discharge lamp (4) starts lighting.

3. A discharge lamp lighting circuit according to Claim 1 or 2, configured such that, the larger the average value is, the faster the control circuit (10) brings the output power of the second DC-DC converter (CONV2) in the active state closer to the output power of the first DC-DC converter (CONV1) in the active state.

4. A discharge lamp lighting circuit according to any preceding Claim wherein the speed at which the control circuit (10) is configured to perform a control of bringing the output power of the second DC-DC converter (CONV2) in the active state closer to the output power of the first DC-DC converter (CONV1) in the active state is set at least twice slower than the speed at which the control circuit (10) performs a control of bringing the average value closer to the target power.

5. A discharge lamp lighting circuit according to Claim 1, wherein the control circuit (10) is configured to monitor a drive current flowing to the discharge lamp (4), and wherein the control circuit (10) is configured to bring, while the second DC-DC converter (CONV2) is set in the active state, a drive current flowing to the discharge lamp (4) when the second DC-DC converter (CONV2) is in the active state closer to a drive current flowing to the discharge lamp (4) when the first DC-DC converter (CONV1) is set in the active state by adjusting the duty ratio of the pulse modulation signal.

6. A method of control of a discharge lamp comprising:
supplying a first drive voltage to one end of a discharge lamp to be driven, by a first DC-DC converter (CONV1) in an active state, wherein the first DC-DC converter comprises a switching element (M1);
supplying a second drive voltage to the other end of the discharge lamp, by a second DC-DC converter (CONV2) in an active state, wherein the second DC-DC converter comprises a switching element (M2); using a control circuit (10), supplying an AC drive voltage to the discharge lamp by alternately setting the first DC-DC converter to be active in a first state (Φ1) and setting the second DC-DC converters to be active in a second state (Φ2) in a predetermined lighting cycle;
using the control circuit, bringing an average value of output power of the first DC-DC converter in the first state (Φ1) and output power of the second DC-DC converter in the second state (Φ2) closer to a predetermined target power by controlling the duty ratio of on and off of the respective switching elements (M1,M2) of the first and second DC-DC converters (CONV1, CONV2) ;
**characterised in that**
the control circuit has a master circuit (34) and a slave circuit (36);
the master circuit (34) outputs a pulse modulation signal (S_{pwm}) to a control terminal of the switching element (M1) of the first DC-DC converter (CONV1) in the first state (Φ1) and to a control terminal of the switching element (M2) of the second DC-DC converter (CONV2) in the second state (Φ2),
the duty ratio of the pulse modulation signal (S_{pwm}) is controlled so as to bring the average value of output power closer to the target power; and
the slave circuit (36) brings, in the second state (Φ2), the output power of the second DC-DC converter (CONV2) in the active state closer to the output power of the first DC-DC converter (CONV1) in the preceding active state by adjusting the duty ratio of the pulse modulation signal (S_{pwm}).

## Patentansprüche

1. Entladungslampen-Lichtstromkreis mit:
einem ersten Gleichspannungswandler (CONV1) mit einem Schaltelement (M1), wobei der erste Gleichspannungswandler (CONV1) angeordnet ist, um in einem aktiven Zustand eine erste Antriebsspannung zu einem Ende einer Entladungslampe (4) zuzuführen, die angetrieben werden soll;
einem zweiten Gleichspannungswandler (CONV2) mit einem Schaltelement (M2),
wobei der zweite Gleichspannungswandler (CONV2) angeordnet ist, um in einem aktiven Zustand eine zweite Antriebsspannung zu dem anderen Ende der Entladungslampe (4) zuzuführen;
einem ersten Schalter (SW1), der mit dem einen Ende der Entladungslampe (4) verbunden ist, um eine elektrische Leitung zwischen dem einen Ende der Entladungslampe (4) und einer Festspannungsklemme in einem EIN-Zustand vorzusehen;
einem zweiten Schalter (SW2), der mit dem anderen Ende der Entladungslampe (4) verbunden ist, um eine elektrische Leitung zwischen dem anderen Ende der Entladungslampe (4) und der Festspannungsklemme in einem EIN-Zustand vorzusehen; und
einer Steuerschaltung (10), die so konfiguriert ist, dass sie eine Wechselspannungs-Antriebsspannung zu der Entladungslampe (4) zuführt, indem sie in einem vorher festgelegten Leuchtzyklus den Entladungslampen-Lichtstromkreis abwechselnd zwischen einem ersten Zustand (Φ1) und einem zweiten Zustand (Φ2) schaltet, und so konfiguriert ist, dass sie einen durchschnittlichen Wert der Ausgangsleistung des ersten Gleichspannungswandlers (CONV1) in dem aktiven Zustand und der Ausgangsleistung des zweiten Gleichspannungswandlers (CONV2) in dem aktiven Zustand näher an eine vorher festgelegte Zielleistung bringt, indem sie das Tastverhältnis von Ein und Aus der jeweiligen Schaltelemente (M1, M2) der ersten und zweiten Gleichspannungswandler (CONV1, CONV2) steuert bzw. regelt,
wobei die Steuerschaltung (10) so konfiguriert ist, dass sie in dem ersten Zustand (Φ1) den ersten Gleichspannungswandler (CONV1) in den aktiven Zustand setzt, den zweiten Gleichspannungswandler (CONV2) in den nicht aktiven Zustand setzt und den zweiten Schalter (SW2) in den EIN-Zustand setzt,
wobei die Steuerschaltung (10) so konfiguriert ist, dass sie in dem zweiten Zustand (Φ2) den ersten Gleichspannungswandler (CONV1) in den nicht aktiven Zustand setzt, den zweiten Gleichspannungswandler (CONV2) in den aktiven Zustand setzt und den ersten Schalter (SW1) in den EIN-Zustand setzt,
**dadurch gekennzeichnet, dass**: -
die Steuerschaltung (10) eine Hauptschaltung (34) und eine Nebenschaltung (36) umfasst,
die Hauptschaltung (34) so konfiguriert ist, dass sie ein Pulsmodulationssignal (S_{pwm}) an einen Steueranschluss des Schaltelements (M1) des ersten Gleichspannungswandlers (CONV1) ausgibt, wenn sich der erste Gleichspannungswandler (CONV1) in dem aktiven Zustand befindet, und an einen Steueranschluss des Schaltelements (M2) des zweiten Gleichspannungswandlers (CONV2) ausgibt, wenn sich der zweite Gleichspannungswandler (CONV2) in dem aktiven Zustand befindet, wobei das Tastverhältnis des Pulsmodulationssignals (S_{pwm}) so gesteuert bzw. geregelt wird, dass der durchschnittliche Wert der Ausgangsleistung näher an die Zielleistung gebracht wird; und
die Nebenschaltung (36) so konfiguriert ist, dass sie, während sich der zweite Gleichspannungswandler (CONV2) in dem aktiven Zustand befindet, die Ausgangsleistung des zweiten Gleichspannungswandlers (CONV2) in dem aktiven Zustand näher an die Ausgangsleistung des ersten Gleichspannungswandlers (CONV1) in dem vorhergehenden aktiven Zustand bringt, indem sie das Tastverhältnis des Pulsmodulationssignals (S_{pwm}) anpasst.

2. Entladungslampen-Lichtstromkreis nach Anspruch 1, wobei die Steuerschaltung (10) so konfiguriert ist, dass sie den ersten Gleichspannungswandler (CONV1) als ersten in den aktiven Zustand versetzt, wenn die Entladungslampe (4) mit dem Leuchten beginnt.

3. Entladungslampen-Lichtstromkreis nach Anspruch 1 oder 2, der so konfiguriert ist, dass die Steuerschaltung (10) die Ausgangsleistung des zweiten Gleichspannungswandlers (CONV2) in dem aktiven Zustand desto schneller näher an die Ausgangsleistung des ersten Gleichspannungswandlers (CONV1) in dem aktiven Zustand bringt, je größer der durchschnittliche Wert ist.

4. Entladungslampen-Lichtstromkreis nach einem der vorhergehenden Ansprüche, wobei die Geschwindigkeit, mit der die Steuerschaltung (10) konfigurationsgemäß eine Steuerung des Bringens der Ausgangsleistung des zweiten Gleichspannungswandlers (CONV2) in dem aktiven Zustand näher an die Ausgangsleistung des ersten Gleichspannungswandlers (CONV1) in dem aktiven Zustand durchführt, auf wenigstens zweimal langsamer als die Geschwindigkeit festgesetzt ist, mit der die Steuerschaltung (10) eine Steuerung des Bringens des durchschnittlichen Werts näher an die Zielleistung durchführt.

5. Entladungslampen-Lichtstromkreis nach Anspruch 1, wobei die Steuerschaltung (10) so konfiguriert ist, dass sie einen Antriebsstrom, der zu der Entladungslampe (4) fließt, überwacht, und wobei die Steuerschaltung (10) so konfiguriert ist, dass sie, während der zweite Gleichspannungswandler (CONV2) in den aktiven Zustand gesetzt ist, einen Antriebsstrom, der zu der Entladungslampe (4) fließt, wenn sich der zweite Gleichspannungswandler (CONV2) in dem aktiven Zustand befindet, näher an einen Antriebsstrom heranbringt, der zu der Entladungslampe (4) fließt, wenn der erste Gleichspannungswandler (CONV1) in den aktiven Zustand gesetzt ist, indem sie das Tastverhältnis des Pulsmodulationssignals anpasst.

6. Verfahren zur Steuerung einer Entladungslampe, das Folgendes umfasst:
Zuführen einer ersten Antriebsspannung zu einem Ende einer Entladungslampe, die angetrieben werden soll, durch einen ersten Gleichspannungswandler (CONV1) in einem aktiven Zustand, wobei der erste Gleichspannungswandler ein Schaltelement (M1) umfasst;
Zuführen einer zweiten Antriebsspannung zu dem anderen Ende der Entladungslampe durch einen zweiten Gleichspannungswandler (CONV2) in einem aktiven Zustand, wobei der zweite Gleichspannungswandler ein Schaltelement (M2) umfasst;
Verwenden einer Steuerschaltung (10), die eine Wechselspannungs-Antriebsspannung zu der Entladungslampe zuführt, indem sie in einem vorher festgelegten Leuchtzyklus abwechselnd den ersten Gleichspannungswandler so einstellt, dass er in einem ersten Zustand (Φ1) aktiv ist, und den zweiten Gleichspannungswandler so einstellt, dass er in einem zweiten Zustand (Φ2) aktiv ist;
Verwenden der Steuerschaltung zum Bringen eines durchschnittlichen Wertes der Ausgangsleistung des ersten Gleichspannungswandlers in dem ersten Zustand (Φ1) und der Ausgangsleistung des zweiten Gleichspannungswandlers in dem zweiten Zustand (Φ2) näher an eine vorher festgelegte Zielleistung durch das Steuern bzw. Regeln des Tastverhältnisses von Ein und Aus der jeweiligen Schaltelemente (M1, M2) der ersten und zweiten Gleichspannungswandler (CONV1, CONV2);
**dadurch gekennzeichnet, dass**
die Steuerschaltung eine Hauptschaltung (34) und eine Nebenschaltung (36) aufweist;
die Hauptschaltung (34) ein Pulsmodulationssignal (S_{pwm}) an einen Steueranschluss des Schaltelements (M1) des ersten Gleichspannungswandlers (CONV1) in dem ersten Zustand (Φ1) ausgibt und an einen Steueranschluss des Schaltelements (M2) des zweiten Gleichspannungswandlers (CONV2) in dem zweiten Zustand (Φ2) ausgibt,
das Tastverhältnis des Pulsmodulationssignals (S_{pwm}) so gesteuert bzw. geregelt wird, dass der durchschnittliche Wert der Ausgangsleistung näher an die Zielleistung gebracht wird; und
die Nebenschaltung (36) in dem zweiten Zustand (Φ2) die Ausgangsleistung des zweiten Gleichspannungswandlers (CONV2) in dem aktiven Zustand näher an die Ausgangsleistung des ersten Gleichspannungswandlers (CONV1) in dem vorhergehenden aktiven Zustand bringt, indem sie das Tastverhältnis des Pulsmodulationssignals (S_{pwm}) anpasst.

## Revendications

1. Circuit d'éclairage de lampe à décharge comprenant :
un premier convertisseur CC-CC (CONV1) comprenant un élément de commutation (111), le premier convertisseur CC-CC (CONV1) étant conçu pour fournir, dans un état actif, une première tension d'excitation à une extrémité d'une lampe à décharge (4) devant être excitée ;
un second convertisseur CC-CC (CONV2) comprenant un élément de commutation (112), le second convertisseur CC-CC (CONV2) étant conçu pour fournir, dans un état actif, une seconde tension d'excitation à l'autre extrémité de la lampe à décharge (4);
un premier commutateur (SW1), connecté à ladite une extrémité de la lampe à décharge (4), pour fournir une conduction électrique entre ladite une extrémité de la lampe à décharge (4) et une borne de tension fixe dans un état sous tension ;
un second commutateur (SW2), connecté à ladite autre extrémité de la lampe à décharge (4), pour fournir une conduction électrique entre ladite autre extrémité de la lampe à décharge (4) et la borne de tension fixe dans un état sous tension ; et
un circuit de commande (10) configuré pour fournir une tension de commande CA à la lampe à décharge (4) en définissant en alternance le circuit d'éclairage de la lampe à décharge entre un premier état (Φ1) et un second état (Φ2) dans un cycle d'éclairage prédéterminé et configuré pour rapprocher une valeur moyenne de la puissance de sortie du premier convertisseur CC-CC (CONV1) dans l'état actif et de la puissance de sortie du second convertisseur CC-CC (CONV2) dans l'état actif d'une puissance cible prédéterminée en contrôlant le rapport cyclique de mise sous et hors tension des éléments de commutation respectif (M1, M2) des premier et second convertisseurs CC-CC (CONV1, CONV2),
dans lequel le circuit de commande (10), dans le premier état (v1), est configuré pour définir le premier convertisseur CC-CC (CONV1) dans l'état actif, pour définir le second convertisseur CC-CC (CONV2) dans l'état non actif et pour définir le second commutateur (SW2) dans l'état sous tension,
dans lequel le circuit de commande (10), dans le second état (Φ2), est configuré pour définir le convertisseur CC-CC (CONV1) dans l'état non actif, pour définir le second convertisseur CC-CC (CONV2) dans l'état actif et pour définir le premier commutateur (SW1) dans l'état sous tension,
**caractérisé en ce que** :
le circuit de commande (10) comprend un circuit maître (34) et un circuit esclave (36),
le circuit maître (34) est configuré pour produire en sortie un signal de modulation d'impulsion (Sₚᵥₘ) vers un terminal de commande de l'élément de commutation (M1) du premier convertisseur CC-CC (CONV1) lorsque le premier convertisseur CC-CC (CONV1) est dans l'état actif et vers un second terminal de l'élément de commutation (M2) du second convertisseur CC-CC (CONV2) lorsque le second convertisseur CC-CC (CONV2) est dans l'état actif, dans lequel le rapport cyclique du signal de modulation d'impulsion (Sₚᵥₘ) est contrôlé de sorte à rapprocher la valeur moyenne de la puissance de sortie de la puissance cible ; et
le circuit esclave (36) est configuré, alors que le second convertisseur CC-CC (CONV2) est dans l'état actif, pour rapprocher la puissance de sortie du second convertisseur CC-CC (CONV2) dans l'état actif de la puissance de sortie du premier convertisseur CC-CC (CONV1) dans l'état actif précédant en ajustant le rapport cyclique du signal de modulation d'impulsion (Sₚₙₘ).

2. Circuit d'éclairage de lampe à décharge selon la revendication 1, dans lequel le circuit de commande (10) est configuré pour définir le premier convertisseur CC-CC (CONV1) dans l'état actif en premier lieu lorsque la lampe à décharge (4) commence à éclairer.

3. Circuit d'éclairage de lampe à décharge selon la revendication 1 ou 2, configuré de telle sorte que, plus la valeur moyenne est grande, plus le circuit de commande (10) rapproche rapidement la puissance de sortie du second convertisseur CC-CC (CONV2) dans l'état actif de la puissance de sortie du premier convertisseur CC-CC (CONV1) dans l'état actif.

4. Circuit d'éclairage de lampe à décharge selon l'une quelconque des revendications précédentes, dans lequel la vitesse à laquelle le circuit de commande (10) est configuré pour assurer une commande consistant à rapprocher la puissance de sortie du second convertisseur CC-CC (CONV2) dans l'état actif de la puissance de sortie du premier convertisseur CC-CC (CONV1) dans l'état actif est définie à une vitesse au moins deux fois plus lente que celle à laquelle le circuit de commande (10) effectue une commande consistant à rapprocher la valeur moyenne de la puissance cible.

5. Circuit d'éclairage de lampe à décharge selon la revendication 1, dans lequel le circuit de commande (10) est configuré pour surveiller un courant d'excitation passant vers la lampe à décharge (4), et dans lequel le circuit de commande (10) est configuré, alors que le second convertisseur CC-CC (CONV2) est défini dans l'état actif, pour rapprocher un courant d'excitation passant vers la lampe de décharge (4) lorsque le second convertisseur CC-CC (CONV2) est dans l'état actif d'un courant d'excitation passant vers la lampe de décharge (4) lorsque le premier convertisseur CC-CC (CONV1) est défini dans l'état actif en ajustant le rapport cyclique du signal de modulation d'impulsion.

6. Procédé de commande d'une lampe à décharge consistant à :
fournir une première tension d'excitation à une extrémité d'une lampe à décharge devant être excitée, au moyen d'un premier convertisseur CC-CC (CONV1) dans un état actif, le premier convertisseur CC-CC comprenant u élément de commutation (M1) ;
fournir une seconde tension d'excitation à l'autre extrémité de la lampe à décharge, au moyen d'un second convertisseur CC-CC (CONV2) dans un état actif, le second convertisseur CC-CC comprenant un élément de commutation (M2) ;
en utilisant un circuit de commande, fournir une tension d'excitation CA à la lampe à décharge en définissant en alternance le premier convertisseur CC-CC comme étant actif dans un premier état (Φ1) et en définissant le second convertisseur CC-CC comme étant actif dans un second état (Φ2) dans un cycle d'éclairage prédéterminé ;
en utilisant le circuit de commande, rapprocher une valeur moyenne de la puissance de sortie du premier convertisseur CC-CC dans le premier état (Φ1) et la puissance de sortie du second convertisseur CC-CC dans le second état (Φ2) d'une puissance cible prédéterminée en contrôlant le rapport cyclique de mise sous et hors tension des éléments de commutation respectifs (M1, M2) des premier et second convertisseurs CC-CC (CONV1, CONV2) ;
**caractérisé en ce que**
le circuit de commande possède un circuit maître (34) et un circuit esclave (36) ;
le circuit maître (34) produit en sortie un signal de modulation d'impulsion (Sₚᵥₘ) vers un terminal de commande de l'élément de commutation (M1) du premier convertisseur CC-CC (CONV1) dans le premier état (Φ1) et vers un terminal de commande de l'élément de commutation (M2) du second convertisseur CC-CC (CONV2) dans le second état (Φ2),
le rapport cyclique du signal de modulation d'impulsion (Sₚₙₘ) est contrôlé de sorte à rapprocher la valeur moyenne de la puissance de sortie de la puissance cible ; et
le circuit esclave (36) rapproche, dans le second état (Φ2), la puissance de sortie du second convertisseur CC-CC (CONV2) dans l'état actif de la puissance de sortie du premier convertisseur CC-CC (CONV1) dans l'état actif précédant en ajustant le rapport cyclique du signal de modulation d'impulsion (Sₚᵥₘ).
